(19) **Europäisches Patentamt**

**European Patent Office**

**Office européen des brevets**

(11) Veröffentlichungsnummer: **0 292 969 B1**

(12) **EUROPÄISCHE PATENTSCHRIFT**

(45) Veröffentlichungstag der Patentschrift: **02.01.92**

(21) Anmeldenummer: **88108426.3**

(22) Anmeldetag: **26.05.88**

(51) Int. Cl.⁵: **A01D 34/70**, A01D 34/67

(54) **Rasenmäher mit Grasfangbehälter.**

(30) Priorität: **29.05.87 DE 3718096**

(43) Veröffentlichungstag der Anmeldung:
**30.11.88 Patentblatt 88/48**

(45) Bekanntmachung des Hinweises auf die
Patenterteilung:
**02.01.92 Patentblatt 92/01**

(84) Benannte Vertragsstaaten:
**AT BE CH DE ES FR GR IT LI LU NL SE**

(56) Entgegenhaltungen:
**DE-A- 2 726 467**
**GB-A- 1 242 515**
**GB-A- 1 396 475**
**GB-A- 2 101 864**

(73) Patentinhaber: **Wolf-Geräte GmbH**
**Gregor-Wolf-Strasse 16 Postfach 860 und
880**
**W-5240 Betzdorf/Sieg(DE)**

(72) Erfinder: **Kolb, Walter**
**Martin-Luther-Strasse 51**
**W-5240 Betzdorf/Sieg(DE)**

(74) Vertreter: **Koch, Günther, Dipl.-Ing. Patentanwälte Wallach, Koch, Dr. Haibach, Feldkamp
et al**
**P.O. Box 121120**
**W-8000 München 12(DE)**

**Beschreibung**

Die Erfindung betrifft einen Rasenmäher mit einem an der Rückseite des Chassis einhängbaren Grasfangbehälter mit tiefliegendem, an den Windtunnel des Mähers anschließenden Mundstück, durch das das geschnittene Gras in den Grasfangbehälter gefördert wird, und mit einer Füllstandsanzeigevorrichtung mit einem Füllstandssensor, der den Füllgrad des Grasfangbehälters erkennbar macht.

Ein solcher Rasenmäher ist aus der GB-A-1 242 515 bekannt. Hierbei wird das Schnittgut durch ein tiefliegendes Mundstück in den Grasfangbehälter geblasen und der Füllstandssensor befindet sich an einer Stelle des Grasfangbehälters, die nicht mit Gras gefüllt wird, d.h. über einem die Grasfüllung begrenzenden Drahtnetz, durch das der Luftstrom fließt. Der Sensor hat die Form einer kippbaren Membran, die auf der Unterseite dem Luftdruck innerhalb des oberen Teils des Grasfangbehälters ausgesetzt ist, und zwar vorzugsweise im oberen vorderen Bereich über dem Drahtnetz, das den Füllraum des Grasfangbehälters begrenzt.

Bei einem anderen bekannten Rasenmäher, der in der US-A-3 971 198 bekannt ist, bei welchem allerdings das abgeschnittene Gras über einen Förderkanal nach dem Deckel des Grasfangbehälters gefördert wird und den Behälter von oben her füllt, ist der Füllstandssensor ebenfalls im Grasfangbehälter dort angeordnet, wo er die maximale Füllhöhe abfüllen kann. Der Füllstandssensor ist hier als Schaufelrad ausgebildet, das durch den Förderluftstrom bzw. das von ihm mitgeführte Gras gedreht wird. Die Drehung wird auf eine Anzeigescheibe auf der Außenseite des Deckels übertragen. Sobald der Behälter gefüllt ist, wird dies durch Stillstand der Anzeigescheibe ersichtlich, deren Antriebsschaufelrad durch das Gras zugesetzt wird und sich dann nicht mehr drehen kann.

Der Erfindung liegt die Aufgabe zugrunde, einen gattungsgemäßen Rasenmäher derart weiterzubilden, daß bei Förderung nach dem Grasfangbehälter über ein Mundstück von unten her der Füllstandsanzeiger zuverlässig immer dann eine auf die Entleerung des Grasfangbehälters hinweisende Anzeige liefert, wenn damit gerechnet werden muß, daß danach keine zuverlässige Förderung des geschnittenen Grases in den Grasfangbehälter hinein erfolgen wird.

Gelöst wird die gestellte Aufgabe durch die im Kennzeichnungsteil des Patentanspruchs 1 angegebenen Merkmale.

Bei der Erfindung wird demgemäß der Sensor im Gegensatz zum bekannten Stand der Technik nicht im Bereich des maximal zulässigen Füllstandes angeordnet, sondern am Übergang zum Grasfangbehälter an einer Stelle, die auf einem sehr viel niedrigerem Niveau liegt als der höchst zulässige Füllstandspegel. Hierdurch wird der Benutzer zu einer Entleerung des Behälters immer dann angehalten, wenn kein Gras mehr in den Fangbehälter gefördert werden kann und stattdessen auf dem Rasen abgelegt wird. Dies kann dann der Fall sein, wenn der Grasfangkorb gefüllt ist, aber auch dann, wenn bei nur teilweise gefülltem Grasfangbehälter das Mundstück z.B. von nassem Gras zugesetzt ist.

Die Anordnung des Füllstandssensors am Boden des Mundstücks gemäß Patentanspruch 2 ist dann zu bevorzugen wenn man sicherstellen will, daß im Betrieb der gesamte Querschnitt des Mundstücks für die Grasförderung frei ist. In der Praxis ist es jedoch zulässig, daß das Mundstück im unteren Teil mit Gras bedeckt wird, wenn nur gewährleistet ist, daß darüber die Grasströmung in den Grasfangbehälter erfolgen kann. Der Sensor muß aber in jedem Falle dann ansprechen, wenn eine solche Förderung nicht mehr möglich ist.

Der Erfindung liegt daher die Erkenntnis zugrunde, daß es zweckmäßig ist, den Füllstand nach dem Zustand des nach dem Grasfangbehälter führenden Kanals zu überwachen und nicht, wie bekannt, den Füllstand im Behälter direkt zu messen.

Nachstehend wird ein Ausführungsbeispiel der Erfindung anhand der Zeichnung beschrieben. In der Zeichnung zeigen:

Fig. 1 eine schematische aufgebrochene Ansicht des Hinterteils eines Rasenmähers mit eingehängtem Grasfangbehälter mit ca. 60-prozentiger Grasfüllung;

Fig. 2 eine Grundrißansicht zu Fig. 1.

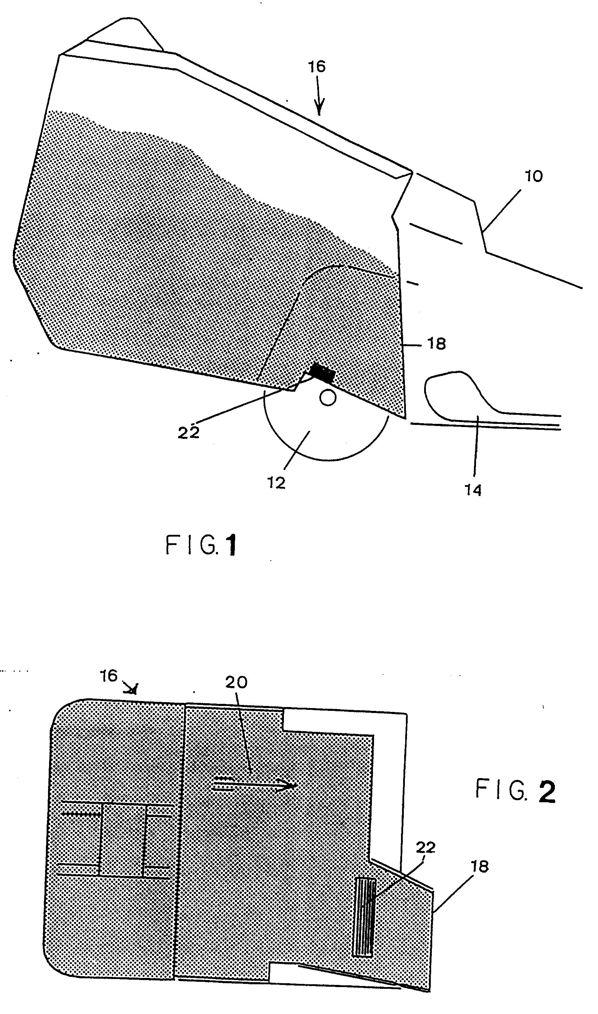

Vom Rasenmäher ist in der Zeichnung nur das Chassis (10) mit den Hinterrädern (12) und dem umlaufenden Messer (14) ersichtlich. An der Rückseite des Chassis ist in bekannter Weise ein Grasfangbehälter (16) eingehängt, durch dessen Mundstück (18) das durch den mit Luftflügeln versehenen Messerbalken geförderte, abgeschnittene Gras in den Fangbehälter überführt wird. Wie durch den Pfeil (20) in Fig. 2 angedeutet und wie in Fig. 1 schematisch dargestellt, baut sich das Gras im Fangkorb (16) von hinten nach vorn auf.

Gemäß dem dargestellten Ausführungsbeispiel ist ein Sensor (22) im Bereich des Mundstückes (18), und zwar am Boden des trichterartigen Mundstücks am Übergang zum Fangbehälter vorgesehen. Diese Stelle der Festlegung des Sensors ist insofern günstig, als das Mundstück während des Betriebes freigehalten wird, und erst wenn ein vorbestimmter Füllungsgrad erreicht ist, setzt sich auch das Mundstück zu und dann wird es Zeit, den Behälter abzunehmen und zu entleeren. Der Sensor kann kapazitiv, induktiv oder als Widerstandsfühler oder als Infrarotsensor ausgebildet und mit einer nicht dargestellten elektronischen Auswerteschaltung verbunden sein, die ein akustisches oder optisches Warnsignal liefert, sobald der Sensor (22) ein Zusetzen des Mundstücks meldet. Die Elektronikschaltung kann bei einem Elektromäher vom Netz gespeist werden und bei einem Mäher, der durch eine Brennkraftmaschine angetrieben wird, entweder über den Zündspannungsgenerator oder einen kleinen zusätzlichen Generator, der vom Motor angetrieben wird. Dabei kann die Elektronikschaltung Stellmittel, beispielsweise in Gestalt von Stellwiderständen aufweisen, die eine Einstellung auf trockenes Gras, feuchtes Gras und nasses Gras ermöglichen, um die unterschiedlichen Leitfähigkeitsbedingungen berücksichtigen zu können.

Die nicht dargestellte Elektronikschaltung mit dem Stromerzeuger, der auch von einer Batterie oder einem Akku gebildet sein kann, sind zweckmäßigerweise geschützt im Chassis des Rasenmähers untergebracht. Die Stromzuführung nach dem Sensor erfolgt über Kontakte, die beim Einhängen des Korbes in Kontaktberührung gelangen. Um eine sichere Kontaktgabe zu gewährleisten, ist die Anordnung zweckmäßigerweise derart getroffen, daß bei der Einhängbewegung zwangsläufig eine Kontaktreinigung erfolgt.

Die Erfindung ist nicht auf das dargestellte Ausführungsbeispiel beschränkt. Es ist auch möglich, den Sensor am Endabschnitt des Windtunnels im Rasenmäher anzuordnen, um die Stromübertragung nach dem Grasfangbehälter zu vermeiden.

**Patentansprüche**

1.  Rasenmäher mit einem an der Rückseite des Chassis einhängbaren Grasfangbehälter (16) mit tiefliegendem, an den Windtunnel des Mähers anschließenden Mundstück (18), durch das das geschnittene Gras in den Grasfangbehälter gefördert wird, und mit einer Füllstandsanzeigevorrichtung mit einem Füllstandssensor (22), der den Füllgrad des Grasfangbehälters erkennbar macht,
    dadurch gekennzeichnet, daß der Füllstandssensor (22) im Grasluftstrom entweder im Bereich des Mundstücks (18) am Übergang zum Grasfangbehälter (16) oder am Endabschnitt des Windtunnels des Rasenmähers angeordnet ist.

2.  Rasenmäher nach Anspruch 1,
    dadurch gekennzeichnet, daß der Füllstandssensor (22) am Boden des Mundstücks (18) angeordnet ist.

3.  Rasenmäher nach Anspruch 1,
    dadurch gekennzeichnet, daß der Füllstandssensor (22) als Widerstandssensor, als kapazitiver oder induktiver Sensor oder als Infrarotsensor ausgebildet ist.

4.  Rasenmäher nach Anspruch 1,
    dadurch gekennzeichnet, daß der Füllstandssensor (22) als Drucksensor ausgebildet ist.

5.  Rasenmäher nach den Ansprüchen 1 bis 4,
    dadurch gekennzeichnet, daß eine Elektronik-Auswerteschaltung durch das den Antriebsmotor speisende Netz oder über die Zündvorrichtung oder einen vom Motor angetriebenen zusätzlichen Generator oder eine Batterie gespeist wird.

**Claims**

1.  Lawn mower with a grass collection container (16) removably attached to the rear side of the mower frame; comprising a low-lying entry mouthpiece (18) joined to the wind tunnel of the mower and conveying grass clippings into the collecting container and further comprising a filling indicator having a filling sensor (22) to indicate the level of grass in the collection container,
    characterized in that said filling sensor (22) is located within the area of the grass-air-float either in the area of the mouuthpiece (18) at the transition to the grass collection container (16) or at the end portion of the wind tunnel of the lawn mower.

2.  Lawn mower in accordance with claim 1,
    characterized in that the filling sensor (22) is located at the bottom of said mouthpiece (18).

3.  Lawn mower in accordance with claim 1
    characterized in that said filling sensor (22) is an electrical resistance sensor or a capacitance sensor or an inductance sensor or an infrared sensor.

4.  Lawn mower in accordance with claim 1
    characterized in that the filling sensor is a pressure sensor.

5.  Lawn mover in accordance with claims 1 to 4
    characterized in that an electronic evaluation circuit is energized by the power supply for the drive motor or by means of the ignition circuit or by an additional generator driven by the motor or by a battery.

**Revendications**

1.  Tondeuse à gazon présentant un collecteur d'herbe (16) pouvant être suspendu à la face postérieure du châssis, et muni d'un embout surbaissé (18) qui se raccorde au tunnel de soufflerie de la tondeuse, et par l'intermédiaire duquel l'herbe coupée est introduite dans le collecteur d'herbe, ainsi qu'un dispositif indicateur du niveau de remplissage, pourvu d'un capteur (22) de niveau de remplissage qui permet de repérer le degré de remplissage du collecteur d'herbe,
caractérisée par le fait que le capteur (22) de niveau de remplissage est disposé, dans le courant d'air charriant l'herbe, soit au voisinage de l'embout (18), à la transition avec le collecteur d'herbe (16), soit dans la région extrême du tunnel de soufflerie de la tondeuse à gazon.

2. Tondeuse à gazon selon la revendication 1, caractérisée par le fait que le capteur (22) de niveau de remplissage est disposé au fond de l'embout (18).

3. Tondeuse à gazon selon la revendication 1, caractérisée par le fait que le capteur (22) de niveau de remplissage est réalisé sous la forme d'un capteur résistif, d'un capteur capacitif ou inductif, voire d'un capteur à infrarouges.

4. Tondeuse à gazon selon la revendication 1, caractérisée par le fait que le capteur (22) de niveau de remplissage est réalisé sous, la forme d'un capteur de pression.

5. Tondeuse à gazon selon les revendications 1 à 4,
caractérisée par le fait qu'un circuit d'interprétation électronique est alimenté par le réseau alimentant le moteur d'entraînement, par le dispositif d'allumage, par un générateur supplémentaire entraîné au moyen du moteur, ou bien par une batterie.

FIG.1

FIG.2